# EUROPÄISCHE PATENTSCHRIFT

(11) **EP 0 523 439 B1**
(45) Veröffentlichungstag und Bekanntmachung des Hinweises auf die Patenterteilung: **01.06.1994**
(21) Anmeldenummer: 92110998.9
(22) Anmeldetag: 29.06.1992
(51) Int. Cl.: F16D 65/28

(54) **Zuspannvorrichtung für eine an einem Rad eines Strassenfahrzeuges angeordnete Bremse**
Actuating device for a brake next to a wheel of a vehicle
Dispositif d'action d'un frein situé près d'une roue d'un véhicule

(30) Priorität: 19.07.1991 DE 4124069
(43) Veröffentlichungstag der Anmeldung: 20.01.1993
(73) Patentinhaber: KNORR-BREMSE AG, 80710 München (DE)
(72) Erfinder: Bieker, Dieter, W-8000 München 82 (DE); Iraschko, Johann, W-8069 Schweitenkirchen (DE)

(56) Entgegenhaltungen:
- DE-A- 1 945 572
- GB-A- 1 238 987

## Beschreibung

Die Erfindung betrifft eine Zuspannvorrichtung für eine an einem Rad einer Achse eines Straßenfahrzeuges angeordnete Scheibenbremse, wobei die Scheibenbremse durch Einleiten einer Sollzuspannung, die als Längskraft oder Drehmoment längs einer zur Achse parallel und seitlich versetzt verlaufenden Zuspannachse auf ein Betätigungsglied wirksam ist, zuspannbar ist, mit einem seitlich der Achse angeordneten, druckluftbeaufschlagbaren Betätigungszylinder, dessen Gehäuse über ein zur Zuspannachse koaxiales Rohrteil mit einem Gehäuseteil der Scheibenbremse fest verbunden und dessen Kolbenstange mit einer das Rohrteil beweglich durchsetzenden, auf das Betätigungsglied einwirkenden Stange gekoppelt ist.

Für Zuspannvorrichtungen für mit einem Rad eines Straßenfahrzeuges verbundene Scheibenbremsen ist es heutzutage überwiegend üblich, hydraulisch beaufschlagbare Bremszylinder vorzusehen. Zur Zuspannung werden hierbei sehr hohe, hydraulische Drücke verwendet, so daß die Bremszylinder sehr klein ausgestaltbar sind, derart, daß sie in Gehäuse- bzw. Sattelteilen der Scheibenbremse integrierbar sind, wobei die Scheibenbremse noch in dem sehr engen und begrenzten, nahe des Rades zur Verfügung stehenden Einbauraumes unterbringbar ist. Ein Beispiel hierzu zeigt die DE-OS 1 945 572, welche jedoch zugleich eine mechanische Betätigungsvorrichtung offenbart, die vermittels eines Drehmomentes zur Zuspannung der Scheibenbremse betätigbar ist, wobei das Drehmoment parallel und seitlich versetzt zur Achse des Rades wirkt. Für viele Straßenfahrzeuge ist es jedoch wünschenswert, die Zuspannvorrichtung für die Scheibenbremse mit einem druckluftbeaufschlagbaren Betätigungszylinder auszustatten; da hierbei jedoch nur relativ niedrige, pneumatische Drücke verwendbar sind, müssen die Betätigungszylinder relativ groß ausgeführt werden. Eine unmittelbare Anordnung dieser großen, druckluftbeaufschlagbaren Betätigungszylinder an der Scheibenbremse ist jedoch oftmals im Hinblick auf den geringen, zur Verfügung stehenden Einbauraum und das große Volumen dieser Betätigungszylinder ausgeschlossen.

Eine Zuspannvorrichtung mit im wesentlichen den eingangs genannten Merkmalen und einer als Längskraft wirkenden Sollzuspannung ist aus der DE-AS 1 189 396 bekannt. Der große, druckluftbeaufschlagbare Betätigungszylinder ist hierbei mit beachtlichem Abstand seitlich der Scheibenbremse angeordnet, sein Gehäuse ist vermittels eines Rohrteiles mit einem der Radlenkung dienenden, zugleich auch ein Gehäuseteil der Scheibenbremse bildenden Teil verbunden und wird somit von diesem getragen. Der Betätigungszylinder befindet sich hierbei seitlich des Endes des die Scheibenbremse tragenden Achsstummels, er überschneidet infolge seines großen Durchmessers die Achsrichtung dieses Achsstummels. Bei Fahrzeugen mit die beidseitigen Räder verbindender Achse muß der Betätigungszylinder somit, bezogen auf das Fahrzeugrad und die Scheibenbremse, zur Fahrzeugaußenseite hin versetzt angeordnet werden, was in der Praxis ausgeschlossen ist.

Aus der DE-AS 1 155 023 sowie 1 257 602 sind weitere Scheibenbremskonstruktionen bekannt, bei welchen die Zuspannvorrichtung durch Einleiten einer als Längskraft wirkenden Sollzuspannung, welche parallel und seitlich versetzt zur Achse wirkt, betätigbar ist. Die DE-OS 1 939 646 zeigt eine ähnliche Scheibenbremse, wobei die Sollzuspannung durch einen pedalbetätigten Bowdenzug geleitet wird; die Scheibenbremse und das Beätigungspedal sind voneinander gesondert am Fahrzeug zu haltern. Die ältere DE-Anmeldung P 40 32 885 beinhaltet eine weitere Scheibenbremse, welche vermittels einer parallel und seitlich versetzt zur Achse wirkenden Längskraft zuspannbar ist, wobei die Längskraft durch einen Stößel einleitbar ist, der seinerseits die Kolbenstange eines Bremszylinders bilden kann.

Für Trommelbremsen, welche an einem Rad einer Achse eines Straßenfahrzeuges angeordnet und vermittels eines Drehnockens zupsannbar sind, sind Zuspannvorrichtungen bekannt, welche eine mit dem Drehnocken verbundene Drehwelle umfassen, die parallel und seitlich versetzt zur Achse in Richtung zur Fahrzeugmitte verläuft und an ihrem Ende einen gff. als Nachstellorgan ausgebildeten Drehhebel aufweist, dessen freies Ende an der Kolbenstange eines druckluftbeaufschlagbaren Betätigungszylinders angelenkt ist, dessen Achsrichtung die Achse bzw. Drehwelle rechtwinklig schneidet oder überkreuzt. Das Gehäuse des Betätigungszylinders ist dabei vermittels einer Konsole an der Achse befestigt. Hieraus ergibt sich, daß beim Druckluftbeaufschlagen des Betätigungszylinders die Drehwelle ein Drehmoment auf den Drehnocken der Trommelbremse ausübt, die Reaktionskraft hierzu vom Gehäuse des Betätigungszylinders über die Konsole zur Achse und von dieser über Lagerungen der Drehwelle auf letztere zurückgeleitet wird, wodurch in diesen Teilen unerwünschte Zusatzbeanspruchungen auftreten und Schwergängigkeiten der Drehwelle bewirkt werden können.

Es ist Aufgabe der Erfindung, eine Zuspannvorrichtung der eingangs genannten Art derart auszugestalten, daß von dieser keine unerwünschten Kräfte in andere Fahrzeugbauteile, insbesondere die Achse ausgehen, auch falls die Scheibenbremse mit einer Verschleißnachstellvorrichtung ausgestattet ist, welche das mit dem Rohrteil verbundene Gehäuseteil nachstellhubabhängig in Richtung der Zuspannachse versetzen kann, wobei die Zuspannvorrichtung im am Fahrzeug vorhandenen Einbauraum gut unterbringbar ist.

Diese Aufgabe wird nach der Erfindung dadurch gelöst, daß der Betätigungszylinder, bezogen auf die Scheibenbremse, zur Fahrzeugmitte hin versetzt seitlich der Achse und der Zuspannachse mit diese zumindest annähernd rechtwinklig schneidender oder kreuzender Zylinderachse allein vom Rohrteil getragen angeordnet ist und daß die Kolbenstange des Betätigungszylinders über einen Drehhebel mit der Stange gekoppelt ist.

Nach der weiteren Erfindung vorteilhafte Ausgestaltungsmöglichkeiten für eine derartige Zuspannvorrichtung sind den Merkmalen der Unteransprüche entnehmbar.

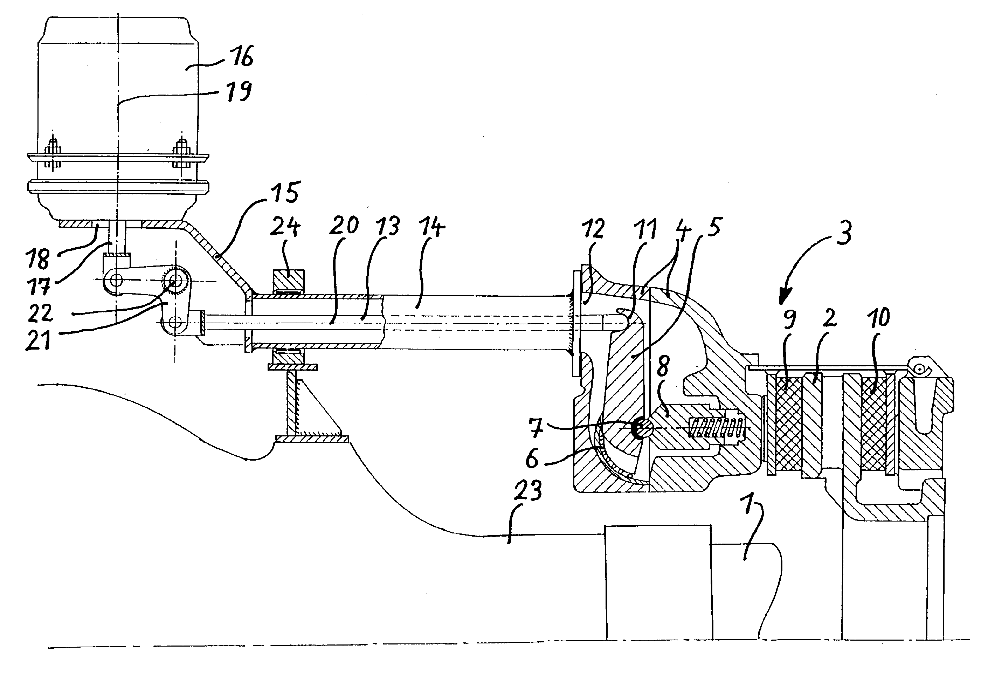

In der Zeichnung ist ein Ausführungsbeispiel für eine nach der Erfindung ausgebildete Zuspannvorrichtung z.T. aufgeschnitten dargestellt.

Der weniger als halbseitig dargestellten, hinteren Achse 1 eines Straßennutzfahrzeuges gehört ein nicht dargestelltes Fahrzeugrad zu, welches mit einer Bremsscheibe 2 einer Scheibenbremse 3 verbunden ist. Die Scheibenbremse 3 weist ein in üblicher, nicht dargestellter Weise gehaltertes Gehäuseteil 4 auf, in welchem ein Nockenhebel 5 um ein Halbschalenlager 6 mit einer die Achse 1 etwa rechtwinklig überkreuzenden Achse drehbar ist. Beim Drehen des Nockenhebels 5 im Uhrzeigersinn drückt dieser über eine Lagerstelle 7 und einen Stößel 8 sowie nicht dargestellte Verbindungsglieder einen Bremsbelag 9 gegen die Bremsscheibe 2, woraufhin als Reaktion hierzu das Gehäuseteil 4 geringfügig in Gegenrichtung zum Anpressen eines andersseitigen Bremsbelages 10 an die Bremsscheibe 2 verschoben wird. Der Stößel 8 oder dessen nicht dargestellte Verbindungsglieder zum Bremsbelag 9 können mit einer nicht dargestellten Verschleißnachstellvorrichtung ausgestattet sein. Am der Lagerstelle 7 und dem Halbschalenlager 6 abgewandten Ende ist der Nockenhebel 5 mit einer Lagerpfanne 11 versehen, über welche als Sollzuspannung eine in Richtung zur Bremsscheibe 2 gerichtete Druckkraft einleitbar ist. Damit entspricht die Scheibenbremse in ihrem Aufbau und in ihrer Funktion im wesentlichen der Scheibenbremse nach der bereits erwähnten DE-Anmeldung P 40 32 885.

Das Gehäuseteil 4 ist bemsscheibenabgewandt mit einer Öffnung 12 versehen, welche von einer in die Lagerpfanne 11 eingreifenden, zur Achse 1 parallel und seitlich versetzt verlaufenden Stange 13 durchgriffen ist; die Stange 13 erstreckt sich von der Lagerpfanne 11 in Richtung zur Fahrzeugmitte. Die Stange 13 ist von einem Rohrteil 14 mit Spiel umgeben, welches die Öffnung 12 umgebend fest mit dem Gehäuseteil 4 verbunden ist. Das sich somit ebenfalls seitlich parallel versetzt zur Achse 1 erstreckende Rohrteil 14 ist an seinem der Scheibenbremse 3 abgewandten Ende mit einem sich etwa rechtwinklig von der Achse 1 weg erstreckenden Schenkel eines winkelartigen Tragteiles 15 fest verbunden, der andere, sich etwa parallel zur Achse 1 erstreckende Schenkel des Tragteiles 15 ist fest mit dem Gehäuse eines Betätigungszylinders 16 verbunden. Die Kolbenstange 17 des Betätigungszylinders 16 durchgreift mit allseitigem Spiel eine Öffnung 18 des Tragteiles 15 in Richtung zur Achse 1. Die Länge des Rohrteiles 14 ist derart bemessen, daß sich der Betätigungszylinder 16 noch zur Scheibenbremse 3 hin seitlich versetzt zur vertikalen Mittellängsebene des Straßennutzfahrzeuges in einem nicht anderweitig benötigten Raum befindet. Die Zylinderachse 19 des Betätigungszylinders 16 schneidet oder überkreuzt zumindest annähernd rechtwinklig die Achse 1 bzw. die im weiteren als Zuspannachse 20 bezeichnete Achse des Rohrteiles 14 bzw. der Stange 13.

Die Kolbenstange 17 und das dem Nockenhebel 15 abgewandte Ende der Stange 13 sind jeweils an einem Schenkel eines einen Drehhebel bildenden Winkelhebels 21 angelenkt, der an seinem Scheitel um eine die Achse 1 sowie die Zylinderachse 19 rechtwinklig überkreuzende Drehachse 22 drehbar am Tragteil 15 gelagert ist. Die Anordnung ist derart, daß beim Ausfahren der Kolbenstange 17 aus dem Betätigungszylinder 16 durch Drehen des Winkelhebels 21 die Stange 13 in Richtung zur Scheibenbremse 3 im Rohrteil 14 verschoben wird, wobei sie über den Nockenhebel 5 die Scheibenbremse 3 zuspannt. Die Reaktionskräfte hierzu werden vom Gehäuse des Betätigungszylinders 16 zur Drehachse 22 und von der Drehachse 22 über das Tragteil 15 und das Rohrteil 14 zum Gehäuseteil 4 derart geleitet, daß durch das Zuspannen der Scheibenbremse keine nach außen wirkenden Reaktionskräfte auftreten. Es können somit auch keine durch derartige Reaktionskräfte oder -momente verursachte Belastungen bzw. Verspannungen von irgendwelchen Fahrzeugteilen oder Führungen bzw. Abstützungen für die Scheibenbremse 3 auftreten, die Betätigung der Scheibenbremse 3 erfolgt somit im Hinblick auf die Reaktionskräfte und -momente jedenfalls verspannungs- und verklemmungsfrei und kann somit leichtgängig erfolgen.

Der mittlere Abschnitt der Achse 1 ist wie üblich von einem feststehenden Gehäuse 23 umschlossen; an diesem Gehäuse 23 ist ein Schiebelager 24 fest gehaltert, welches das Rohrteil 14 mit Schiebesitz parallel zur Zuspannachse 20 führt. Dieses Schiebelager 24 wird von den Zuspannkräften für die Scheibenbremse 3 nicht belastet, es unterstützt lediglich das Rohrteil 14 in seiner Tragefunktion für den Beätitgungszylinder 16 und gibt letzterem einen verbesserten Halt gegenüber der Achse 1. Während Zuspannvorgängen der Scheibenbremse 3 oder Nachstellvorgängen der Verschleißnachstellvorrichtung auftretende Verschiebebewegungen des Gehäuseteiles 4 parallel zur Achse 1 werden durch das Rohrteil 14 und das Tragteil 15 verspannungsfrei auf den Betätigungszylinder 16 übertragen, ohne daß hierdurch die Zuspannsituation für die Scheibenbremse 3 in irgendeiner Weise beeinflußt wird. Auch die Lage der Kolbenstgange 17 erfährt hierbei keine ungünstige Auslenkung relativ zur Zylinderachse 19.

Dem andersseitigen Fahrzeugrad der Achse 1 ist eine spiegelbildlich zur vorbeschriebenen gleichartige Anordnung zugeordnet.

Falls die Scheibenbremse nicht, wie zum vorstehenden Ausführungsbeispiel beschrieben, durch eine zur Zuspannachse 20 parallel wirkende Längskraft auf den Nockenhebel 5, sondern durch ein um die Zuspannachse 20 wirkendes Drehmoment zuspannbar ist, wie es beispielsweise bei Verwendung einer Scheibenbremse gemäß der vorstehend bereits erwähnten DE-OS 1 945 572 hinsichtlich deren den Zuspannhebel für die mechanische Bremse tragender Welle der Fall wäre, müßte die in diesem Falle Drehmoment übertragende Stange 13 an ihrem der Scheibenbremse abgewandten Ende einen radial auskragenden Drehhebel tragen, an dessen Ende die Kolbenstange 17 anzulenken wäre. Dabei wäre es zweckmäßig, die drehmomentübertragende Stange nahe des Drehhebels im Rohrteil 14 oder an dem Tragteil 15 mittels eines Drehlagers zu lagern. Auch bei dieser Ausbildung ergibt sich eine von Reaktionskräften und -momenten aus der Zuspannung freie Führung, Halterung und Betätigung für die Scheibenbremse und deren Zuspannvorrichtung, so daß diese leichtgängig verbleiben und nicht infolge derartiger Reaktionswirkungen verklemmen oder schwergängig werden können.

Der Betätigungszylinde 16 kann als einfacher, direkt wirkender Bremszylinder, als Federspeicherzylinder oder Kombizylinder ausgebildet sein. Bezogen auf das Straßennutzfahrzeug befindet er sich in einem von anderen Bauteilen freien Raum in Entfernung zum Bereich des Fahrzeugrades und der Scheibenbremse 3, er kann daher ausreichend groß zur Betätigung der Scheibenbremse vermittels Druckluft ausgebildet werden.

### Kurzfassung:

Die Zuspannvorrichtung ist für eine an einem Rad einer Achse eines Straßenfahrzeuges angeordnete Scheibenbremse (3) vorgesehen. Die als Längskraft oder Drehmoment längs einer zur Achse (1) parallel und seitlich versetzt verlaufenden Zuspannachse (20) wirkende Sollzuspannung wird der Scheibenbremse (3) durch eine Stange (13) zugeführt. Die Stange (13) verläuft koaxial zur Zuspannachse (20) zur Fahrzeugmitte hin und ist mit Spiel von einem Rohrteil (14) umgeben. Das Rohrteil (14) ist einerseits fest mit einem Gehäuseteil (4) der Scheibenbremse (3) verbunden und trägt andererseits einen Betätigungszylinder (16), dessen Kolbenstange (17) über einen Winkelhebel (21) oder einen Drehhebel auf das scheibenbremsferne Ende der Stange (13) einwirkt. Nahe des Betätigungszylinders (16) kann das Rohrteil (14) vermittels eines Schiebelagers (24) schiebegelagert sein.

Der Betätigungszylinder (16) ist somit entfernt von der Scheibenbremse (3) und dem Fahrzeugrad in einem von anderen Bauteilen freien Raum am Fahrzeug unterbringbar, er kann ausreichend groß für eine Druckluftbetätigung der Scheibenbremse (3) dimensioniert werden. Alle Reaktionskräfte bzw. -momente beim Betätigen der Scheibenbremse (3) werden innerhalb dieser bzw. der Zuspannvorrichtung aufgenommen bzw. abgestützt, die Halterung bzw. Führung der Scheibenbremse (3) und der Zuspannvorrichtung bleiben von derartigen Reaktionswirkungen unbeeinflußt. Bei Zuspann- bzw. Verschleißvorgängen an der Scheibenbremse (3) kann das Gehäuseteil (4) Verschiebungen in Richtung der Zuspannachse (20) erfahren, die gesamte Zuspannvorrichtung mitsamt dem Betätigungszylinder (16) kann diesen Verschiebungen stets zwangsfrei und ohne Rückwirkung auf die Zuspannvorgänge folgen.

### Bezugszeichenliste

- 1: Achse
- 2: Bremsscheibe
- 3: Scheibenbremse
- 4: Gehäuseteil
- 5: Nockenhebel
- 6: Halbschalenlager
- 7: Lagerstelle
- 8: Stößel
- 9: Bremsbelag
- 10: Bremsbelag
- 11: Lagerpfanne
- 12: Öffnung
- 13: Stange
- 14: Rohrteil
- 15: Tragteil
- 16: Betätigungszylinder
- 17: Kolbenstange
- 18: Öffnung
- 19: Zylinderachse
- 20: Zuspannachse
- 21: Winkelhebel
- 22: Drehachse
- 23: Gehäuse
- 24: Schiebelager

## Patentansprüche

1. Zuspannvorrichtung für eine an einem Rad einer Achse (1) eines Straßenfahrzeuges angeordnete Scheibenbremse (3), wobei die Scheibenbremse (3) durch Einleiten einer Sollzuspannung, die als Längskraft oder Drehmoment längs einer zur Achse (1) parallel und seitlich versetzt verlaufenden Zuspannachse (20) auf ein Betätigungsglied (5) wirksam ist, zuspannbar ist, mit einem seitlich der Achse (1) angeordneten, druckluftbeaufschlagbaren Betätigungszylinder (16), dessen Gehäuse über ein zur Zuspannachse (20) koaxiales Rohrteil (14) mit einem Gehäuseteil (4) der Scheibenbremse (3) fest verbunden und dessen Kolbenstange (17) mit einer das Rohrteil (14) beweglich durchsetzenden, auf das Betätigungsglied (5) einwirkenden Stange (13) gekoppelt ist, dadurch gekennzeichnet, daß der Beätigungszylinder (16), bezogen auf die Scheibenbremse (3), zur Fahrzeugmitte hin versetzt seitlich der Achse (1) und der Zuspannachse (20) mit diese zumindest annähernd rechtwinklig schneidender oder kreuzender Zylinderachse (19) allein vom Rohrteil (14) getragen angeordnet ist und daß die Kolbenstange (17) des Betätigungszylinders (16) über einen Drehhebel (21) mit der Stange (13) gekoppelt ist.

2. Zuspannvorrichtung nach Anspruch 1, gekennzeichnet durch ein winkelartiges Tragteil (15), dessen einer Schenkel am scheibenbremsfernen Ende des Rohrteiles (14) und dessen anderer Schenkel am Betätigungszylinder (16) fest gehaltert ist.

3. Zuspannvorrichtung nach Anspruch 1 oder 2, wobei das Gehäuseteil (4) in Abhängigkeit von Zuspannvorgängen der Scheibenbremse und/oder von einer in letzterer integrierten Verschleißnachstellvorrichtung nachstellhubabhängig in Richtung der Zuspannachse (20) versetzbar ist, dadurch gekennzeichnet, daß das Rohrteil (14) nahe seines scheibenbremsfernen Endes in einem achsfesten Schiebelager (24) in Richtung der Zuspannachse (20) schiebegelagert ist.

4. Zuspannvorrichtung nach einem oder mehreren der vorstehenden Ansprüche 1-3, mit einer als Längskraft wirkenden Sollzuspannung, dadurch gekennzeichnet, daß der Drehhebel als ein etwa rechtwinkliger Winkelhebel (21) ausgebildet ist, der an seinem Scheitel um eine die Zuspannachse (20) und die Zylinderachse (19) mit Abstand rechtwinklig kreuzende Drehachse (22) drehgelagert ist und dessen einer, etwa parallel zur Zuspannachse verlaufender Hebelarm an der Kolbenstange (17) des Betätigungszylinders (16) und dessen anderer Hebelarm an der Stange (13) angelenkt ist.

5. Zuspannvorrichtung nach den Ansprüchen 2 und 4, dadurch gekennzeichnet, daß der Winkelhebel (21) am Tragteil (15) drehgelagert ist.

6. Zuspannvorrichtung nach einem oder mehreren der Ansprüche 1-3, mit einer als Drehmoment wirkenden Sollzuspannung, dadurch gekennzeichnet, daß der Drehhebel (21) einerseits drehfest mit der Stange (13) verbunden und andererseits an der Kolbenstange (17) angelenkt ist.

7. Zuspannvorrichtung nach Anspruch 6, dadurch gekennzeichnet, daß die Stange (13) nahe des scheibenbremsfernen Endes im Rohrteil (14) drehgelagert ist.

## Claims

1. Activating device for a disk brake (3) arranged on a wheel of an axle (1) of a road vehicle, with it being possible to activate the disk brake (3) by triggering a desired activation which takes effect on an actuating element (5) as a longitudinal force or torque along an axis (20) of activation extending parallel to the axle (1) and laterally offset in relation thereto, having an actuating cylinder (16), which is arranged at the side of the axle (1) and to which compressed air can be applied, the housing of the cylinder (16) being fixedly connected to a housing portion (4) of the disk brake (3) by way of a tubular portion (14) which is coaxial to the axis (20) of activation, and the piston rod (17) of the cylinder (16) being coupled with a rod (13) which passes through the tubular portion (14) in a movable manner and acts on the actuating element (5), characterised in that the actuating cylinder (16) is arranged, relative to the disk brake (3), so as to be offset towards the centre of the vehicle, to the side of the axle (1) and the axis (20) of activation, with cylinder axis (19) intersecting or crossing the latter (axis (20) of activation) at least substantially at right angles thereto, and so as to be supported solely by the tubular portion (14), and in that the piston rod (17) of the actuating cylinder (16) is coupled with the rod (13) by way of a rotary lever (21).

2. Activating device according to claim 1, characterised by an angular supporting portion (15), the one leg of which is fixedly held at the end of the tubular portion (14) that is remote from the disk brake and the other leg of which is fixedly held on the actuating cylinder (16).

3. Activating device according to claim 1 or 2, in which the housing portion (4) can be displaced as a function of activating processes of the disk brake and/or of a wear-compensation arrangement integrated in the disk brake, as a function of the compensation movement in the direction of the axis (20) of activation, characterised in that close to its end that is remote from the disk brake the tubular portion (14) is slide-mounted in the direction of the axis (20) of activation in a sliding bearing (24) which is fixed with respect to the axle.

4. Activating device according to one or several of the preceding claims 1-3, having a desired activation which takes effect as a longitudinal force, characterised in that the rotary lever is formed as a substantially right-angled bell-crank lever (21) which is rotatably mounted at its angle point about an axis (22) of rotation which crosses the axis (20) of activation and the cylinder axis (19) at right angles with a spacing and the one lever arm of which, extending substantially parallel to the axis of activation, is articulated on the piston rod (17) of the actuating cylinder (16) and the other lever arm of which is articulated on the rod (13).

5. Activating device according to claims 2 and 4, characterised in that the bell-crank lever (21) is rotatably mounted on the supporting portion (15).

6. Activating device according to one or several of the claims 1-3, having a desired activation which takes effect as a torque, characterised in that the rotary lever (21), on the one hand, is connected to the rod (13) in a manner fixed with respect to rotation and, on the other hand, is articulated on the piston rod (17).

7. Activating device according to claim 6, characterised in that close to the end that is remote from the disk brake the rod (13) is rotatably mounted in the tubular portion (14).

## Revendications

1. Dispositif de serrage pour un frein à disque (3), monté sur une roue d'un essieu (1) d'un véhicule sur route, et qui peut être serré au moyen de l'application d'un effort de serrage de consigne, qui agit sur un organe d'actionnement (5), sous la forme d'une force longitudinale ou d'un couple le long d'un axe de serrage (20), qui est parallèle et décalé par rapport à l'essieu (1), et comportant un vérin d'actionnement (16) qui est disposé latéralement par rapport à l'essieu (1), qui peut être alimenté en air comprimé et dont le boîtier est raccordé de façon fixe par l'intermédiaire d'une pièce tubulaire (14), coaxiale à l'axe de serrage (20), à un élément de boîtier (4) du frein à disque (3) et dont la tige de piston (17) est accouplée à une barre (13) qui traverse, avec possibilité de déplacement, la pièce tubulaire (14) et agit sur l'organe d'actionnement, caractérisé par le fait que le vérin d'actionnement (16) est disposé, en étant décalé en direction du centre du véhicule, par rapport au frein à disque (3), latéralement par rapport à l'essieu (1) et par rapport à l'axe de serrage (20), tout en étant porté, ainsi que l'axe (19) du cylindre, qui recoupe ou croise au moins approximativement à angle droit l'axe de serrage, uniquement par la pièce tubulaire (14) et que la tige de piston (17) du vérin d'actionnement (16) est accouplée à la barre (13) par l'intermédiaire d'un levier pivotant (21).

2. Dispositif de serrage suivant la revendication 1, caractérisé par une pièce de support en forme de cornière (15), dont une aile est fixée fermement sur l'extrémité, éloignée du frein à disque, de la pièce tubulaire (14) et dont l'autre aile est fixée fermement au vérin d'actionnement (16).

3. Dispositif de serrage suivant la revendication 1 ou 2, dans lequel l'élément de boîtier (4) peut être déplacé dans la direction de l'axe de serrage (20), en fonction d'opérations de serrage du frein à disque et/ou d'un dispositif de rattrapage du jeu dû à l'usure, intégré dans le frein à disque, et ce en fonction de la course de rattrapage de jeu dans la direction de l'axe de serrage (20), caractérisé par le fait que la pièce tubulaire (14) est montée de manière à pouvoir glisser, à proximité de son extrémité éloignée du frein à disque, dans un palier coulissant (24) solidaire de l'axe, dans la direction de l'axe de serrage (20).

4. Dispositif de serrage selon une ou plusieurs des revendications précédentes 1 à 3, à tension de serrage de consigne agissant en tant que force longitudinale, caractérisé par le fait que le levier pivotant est réalisé sous la forme d'un levier coudé approximativement à angle droit (21), dont le sommet est monté pivotant autour d'un axe de rotation (22) qui croise à angle droit et à distance l'axe de serrage (20) et l'axe (19) du vérin et dont un bras de levier, qui est approximativement parallèle à l'axe de serrage, est articulé sur la tige de piston (17) du vérin d'actionnement (16) et dont l'autre bras de levier est articulé sur la barre (13).

5. Dispositif de serrage suivant les revendications 2 et 4, caractérisé par le fait que le levier coudé (21) est monté pivotant sur l'élément de support (15).

6. Dispositif de serrage suivant une ou plusieurs des revendications 1 à 3, avec mise en oeuvre d'une tension de serrage de consigne agissant sous la forme d'un couple, caractérisé par le fait que le levier pivotant (21) est, d'une part, relié avec blocage en rotation à la barre (13), et, d'autre part, articulé sur la tige de piston (17).

7. Dispositif de serrage suivant la revendication 6, caractérisé par le fait que la barre (13) est montée pivotante à proximité de l'extrémité, éloignée du frein à disque, dans la pièce tubulaire (14).
